(19) Europäisches Patentamt / European Patent Office / Office européen des brevets

(11) **EP 2 568 594 A1**

(12) # EUROPEAN PATENT APPLICATION

(43) Date of publication:
**13.03.2013 Bulletin 2013/11**

(51) Int Cl.:
*H02M 7/81* (2006.01)     *H02M 1/12* (2006.01)
*H02J 3/48* (2006.01)

(21) Application number: **11384202.5**

(22) Date of filing: **12.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Green Power Technologies, S.L.
41110 Bollullos de la Mitación Sevilla (ES)**

(72) Inventors:
• **Rodriquez, Pedro**
  **08222 Terrassa-Barcelona (ES)**
• **Dias Bellar, Maria**
  **CEP 20231-048, RJ (BR)**
• **Muñoz Aguilar, Raúl Santiago**
  **08226 Terrassa-Barcelona (ES)**
• **Aldabas Rovira, Emiliano**
  **08221 Terrassa-Barcelona (ES)**
• **Vázquez Guzmán, Gerardo**
  **08222 Terrassa-Barcelona (ES)**

(54)    **DC time-multiplexed power converter and its modulation technique**

(57)    This invention deals with a power processing system able to process the **power exchanged between an alternating current (AC) network {7} and multiple direct current (DC) elements {1} by time-multiplexing their connection {3} to the DC side of a DC/AC full-bridge (FB) power converter {4}.** This is the reason why this invention has been named **DC Time-Multiplexed Power Processor** and its acronym is **DCM-*xyz***, where *x* is the number of DC ports {2} of the power processing structure, *y* is the number AC phases, and *z* is the number of voltage levels used in the DC/AC power conversion process. Even though the DCM-*xyz* power processing structure was technically designed to work as an inverter in grid-connected PV power generation systems, i.e., delivering the power generated by the multiple DC PV panels to an AC grid, it can also operate as a rectifier if necessary, i.e., supplying multiple DC loads from the power consumed from the AC grid. Moreover, when the DCM-*xyz* power processing structure operates in inverter mode, its DC ports can be supplied by any primary energy source other than the PV one. The DC system of the DCM-*xyz* power processing structure can be constituted by a number higher than one of DC ports (*x*), and any arbitrary number of AC phases (*y*), being feasible to use any arbitrary number of voltage levels (*z*) in its power converter.

*Fig. 2*

EP 2 568 594 A1

Printed by Jouve, 75001 PARIS (FR)

**Description**

**Field of the invention**

The DCM-xyz invention is framed within the field of transformerless grid-connected power converters. This invention was specifically designed to be used as a transformerless power converter in grid-connected PV generation systems, although it can be used in other applications as well. This invention presents a power conversion system able to exchange energy between multiple DC power sources and an AC grid by using a time-multiplexing power conversion structure and a proper modulation technique. By using such a modulation technique, the parasitic capacitances to earth of the DC power sources are charged at a constant voltage level, which allows cancelling out the stray currents flowing through them. These currents are one of the main problems in the grid-connection of transformerless PV power generation systems, since they give rise to malfunctions and premature aging of PV panels, and this is the main reason why the DCM-xyz was designed. Moreover, this modulation technique allows a remarkable reduction of the hard-switching power losses in the DCM-xyz power converter. This last feature, together the possibility of removing the grid-connection transformer in the DCM-xyz power converter gives rise to a very high efficiency in the overall power conversion system. Though a grid-connected power converter for PV generation systems is the most straightforward application for the DCM-xyz power conversion structure, any other system comprising energy exchange between one AC source and multiple DC sources by using a time-multiplexing technique to cancel out the flow of leakage current to earth can be also considered framed within the field of this invention, independently of the direction of such power flow.

The AC side of the DCM-xyz power converter can have an arbitrary number of phases and operate with generic values of frequency and the voltage amplitude. The AC grid-connection can be made either with or without using a transformer connected at the AC output of the DCM-xyz power converter. The multiple DC sources, connected to the DC side of the DC/AC power converter by using a power multiplexer, can have different voltage levels and deliver different amounts of power. The DC elements can be either power sources or loads, which can be either directly connected to the DC ports of the power multiplexer or indirectly connected by using an extra power converter.

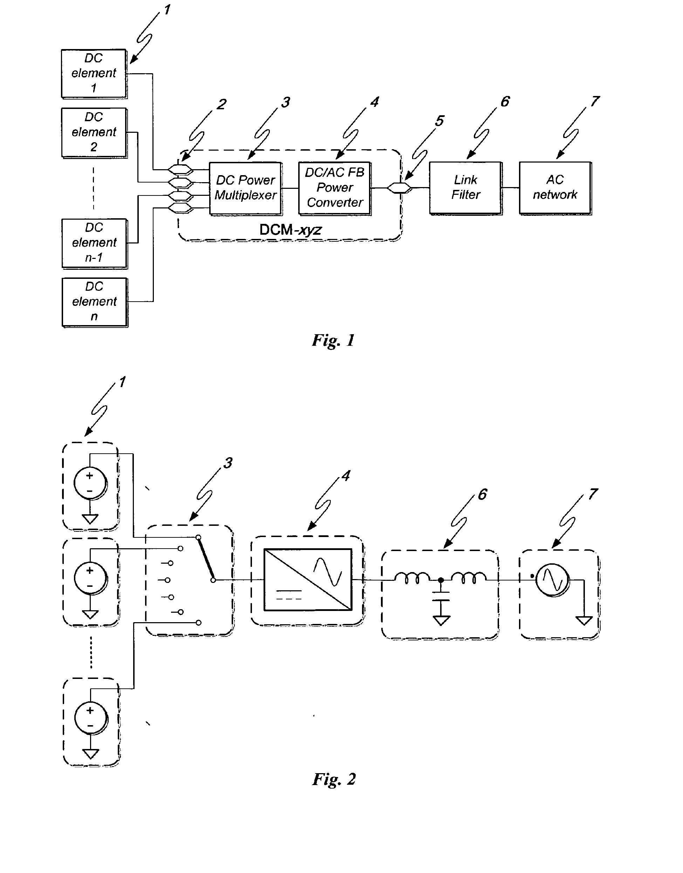

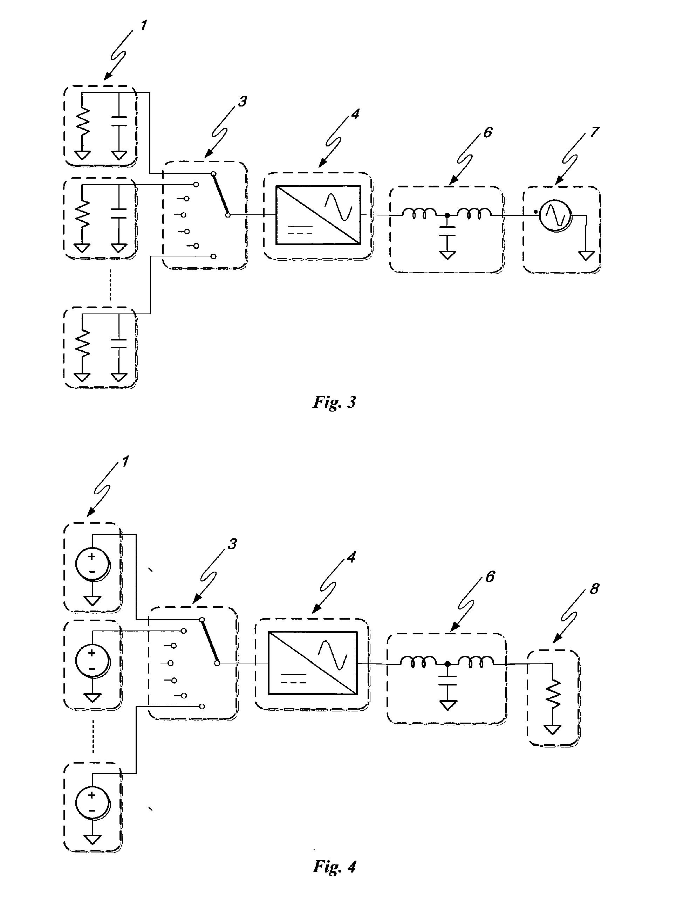

The DCM-xyz power processing system is suitable to be used in photovoltaic (PV) power applications, where multiple PV panels acting as voltage sources are time-multiplexed to deliver power to the AC grid by using a common DC/AC power conversion structure as depicted in *Fig. 2*. The DCM-xyz power processing system is also suitable for other applications where the multiple DC buses are generated by using auxiliary power converters, for example, in the case of a multiphase synchronous generator, where a given number of DC buses are made by using several diode rectifiers. As shown in *Fig. 3,* the DCM-xyz power processor can be also used as an active rectifier connected to an AC grid to supply multiple DC loads by using a common power converter and a power multiplexer. The DCM-xyz power processing system can also be used as an off-grid inverter collecting power from multiple DC buses to supply stand-alone AC loads, as shown in *Fig. 4.* Additionally, the DCM-xyz power processor can be also used in bidirectional power applications, as in the case of energy storage systems.

The modulation technique associated to the DCM-xyz power converter makes possible to achieve two crucial objectives in PV applications, namely, a very high value for the efficiency of the power converter and a minimal leakage current in transformerless applications.

**Background of the invention**

The fast evolution experienced by PV cells technology in the last decades has been accompanied by new concepts and solutions on power processing to ensure the highest possible levels of efficiency, performance and reliability. The first PV power generation systems were designed to supply satellites at the end of the 50's. Later, this power generation technology arrived to the first terrestrial applications such as small houses, farms and public lighting systems (generally low power systems). From the beginning of the XXI century, the PV power generation technology reached a maturity degree to become considered as a clear candidate for the future generation mix and most of the PV generation systems are connected to the electrical grid by means of PV power converters [1].

The grid-connected PV power converter topologies can be classified in two main groups: on one hand there are the topologies with a transformer between the AC grid and the DC PV field, either at the AC side (low frequency transformer) [2] or at the DC side (high frequency transformer) [3], and on the other hand there are the transformerless topologies, which usually only use a small link filter at the output of the inverter to connect to the AC grid [4]. The transformer provides galvanic isolation between the DC PV field and the AC grid, which reduces the risk of stray currents flowing through the earth circuit and minimizes EMC (Electromagnetic Compatibility) problems. However, such a transformer gives rise to additional power losses, in its windings and core, which results in a reduction of the overall efficiency of the power generation system. Moreover, as an additional drawback, the LF transformer uses to be big, bulky and expensive. The transformerless topologies however directly connect the DC PV field to the AC grid through a DC/AC power converter, with no galvanic isolation. This solution allows improving the efficiency of the PV power processing system. Moreover, the transformerless PV power converters use to be cheaper and lighter. However, this type of connection decreases the grid impedance connection and creates an earth circuit from the DC side to the AC grid, which increases the risk of stray currents in case of any failure in either the PV field or the power converter. This makes necessary to earth exposed conductive parts on DC side and, in some cases, a local earth rod must be installed to avoid earth current dispersion toward the grid.

Most of the PV power generation facilities are based on the usage of PV panels, which are typically manufactured in a sandwich structure involving a front-end glass, several active silicon semiconductor layers and a backplane. The junction of these layers is enclosed into a metallic frame connected to earth [5]. The compactness of the PV panels results in small parasitic capacitances between the active parts and the frame of the PV panels [6]. These parasitic capacitances allow closing a circuit for high frequency stray currents flowing to earth. These currents are particularly important in PV application, where the power converters are switched at high frequencies, in the range several tenth of kHz. If the modulation strategy and the topology of such power converters are not properly designed, significant leakage currents can flow through the parasitic capacitances as a consequence of the high frequency common-mode voltage components generated at the output of the power converter. The common-mode voltage (CMV) in a single-phase power converter is calculated by:

$$v_{CMV} = \frac{v_{ao} + v_{bo}}{2}, \qquad (1)$$

where $v_{ao}$ and $v_{bo}$ are the voltage of the AC output terminal of the power converter *(a, b)* referred to a reference point of its DC bus (o). It is worth to remark that the leakage currents generated by the common-mode voltage can give rise to interferences in communication lines, resonances, malfunctions in protection systems, premature aging of the PV panels, etc.

The most popular inverter topology for single-phase systems is known as H-bridge (HB), developed by W. Mcmurray in 1965 [7]. When the HB is modulated by using bipolar PWM (Pulse Width Modulation), the common-mode voltage generated at the output terminals of the power converter is constant, which avoid leakage currents flowing through the parasitic capacitances of the PV panels. However, the bipolar output voltage gives rise to high power losses in the grid link inductors due to the bidirectional exchange of energy with the DC bus, which dramatically reduces the efficiency of the HB power converter. If unipolar PWM is used to modulate the conventional HB, the output voltage will have three levels, i.e., the positive and negative levels, set by the active switching states, and the zero level, set by the zero switching states. By using this modulation pattern, the common-mode voltage at its output will have high frequency components since the common-mode voltage levels are different for the active and the zero switching states. These high frequency common-mode voltage components result in significant stray currents flowing through the parasitic capacitances of the PV panels. For this reason, new three-level power conversion topologies have been proposed as a solution to the leakage current flow in single phase PV power generation systems.

The H5 topology, patented in 2005 [8], added a fifth switch to the conventional HB topology with the objective of isolating the DC bus from the AC grid during the zero switching states. In this way, the DC side is electrically connected to the AC grid only during the two active switching states. These active states generate a constant value for the common-mode voltage at the converter output. During the zero switching states, the fifth switch of the H5 topology is turned OFF to avoid any current flow between the DC and AC sides. As a consequence, the parasitic capacitances of the PV panels are charged at a constant voltage level and no stray currents flow through them. Additionally, a high efficiency is achieved due to the unipolar characteristic of the output voltage and to the lower switching frequency in one of the legs of the HB.

The HERIC (High Efficiency Reliable Inverter Concept) topology, patented in 2006 [9], is also derived from the conventional HB topology. In this topology, a bidirectional switch is added at the output of the HB converter (before the AC link filter). During the zero switching states, this additional switch is turned ON and the four switches of the HB are turned OFF, isolating the DC side from the AC grid. The two active switching states are generated by the HB switches, with the fifth switch in OFF state. Therefore, the PV panel parasitic capacitances are charged at a constant voltage level during the active switching states and they are not discharged during the zero switching states since the DC side is isolated from the AC grid. As a consequence, no leakage current flows through the parasitic capacitances. Moreover, the particular switching pattern of this topology allows achieving a very high efficiency rate.

Following the H5 and HERIC ideas, other PV topologies improving the performance of the conventional HB have been proposed in the last years, such as [10] [11] [12].

Another approach for avoiding leakage currents consists in clamping the mid-point of the DC bus to the neutral conductor of the grid. As the neutral conductor uses to be earth connected, the DC bus is statically referred to the earth potential, preventing voltage variations on the parasitic capacitances and canceling out the flow of leakage currents.

Some examples for neutral clamped PV power converter can be found in [13][14]. In this topologies however, the DC bus voltage should be higher than the one in the topologies based on the conventional HB. Moreover, the current injected in the DC bus midpoint trends to originate instantaneous voltage unbalance between the two DC bus capacitors, which makes necessary to take specific measures, such as capacitors overrating, to keep the DC bus voltage balanced.

The control of the common-mode voltage variation is more complex in three-phase PV inverters than in the case of the single-phase ones since the common-mode voltage of all the active switching states is not constant. The common-mode voltage in a three-phase inverter is calculated by:

$$v_{CMV} = \frac{v_{ao} + v_{bo} + v_{co}}{3},\qquad (2)$$

where $v_{ao}$, $v_{bo}$ and $v_{co}$ are the voltage of the three output phases of the power converter *(a, b,* c) referred to a reference point of the DC bus (o).

The most popular inverter topology used in three-phase systems is known as the full-bridge (FB), which consists of three legs that can generate several voltage levels at their outputs. The most extended version of the FB works with two-levels, though three-level and five-level FB topologies have increased their presence in the market for high power applications in the last years [15]. The two-level FB inverter has six active and two zero switching states. Taking $V_{dc}$ as the DC bus voltage and a feasible DC bus midpoint as the reference node (o), the common-mode voltage calculated by (2) is always different from zero and takes values of $+V_{dc}/6$, $-V_{dc}/6$ and $\pm V_{dc}/2$ for the even active, odd active and zero switching states, respectively. Therefore, the solution proposed in the H5 and HERIC topologies, which consisted in isolating the DC side from the AC grid during the zero states, cannot be applied to the three-phase two-level FB topology, since the common-mode voltage level varies between the odd and even active states, which generates leakage currents flowing through the parasitic capacitances when both active states are applied in a switching sequence. Some reduced common-mode voltage PWM techniques have been recently proposed for the two-level FB [16] [17]. However, these PWM methods require more DC voltage and generate more current ripple than the conventional ones, requiring in many cases simultaneous switching, which decreases the efficiency of the power conversion process. Moreover, each of these PWM methods can be used within certain modulation index regions, which makes more difficult the control of the power converter. The problem of the leakage current can be attenuated when the legs of the FB power converter generate more than two levels. In multi-level FB power converters, the higher number of levels the smaller jumps in the common-mode voltage level and the lower leakage currents. However, multi-level inverters are more expensive that the conventional two-level FB. Moreover, additional issues, as the balance of the DC voltage among the power converter capacitors, make the control of multi-level inverters much more complex than in the case of the conventional two-level FB [18]. A simple way to cancel out the leakage current problem generated by the common-mode voltage of the three-phase FB inverters consists in connecting the DC bus to the neutral conductor of the AC grid, providing this neutral conductor is earth connected in some point. As studied in [19], this solution significantly reduces the leakage current in the power converter. However, this simple technique presents a serious drawback, since SVM (Space Vector Modulation) cannot be used, which results in around a 15% reduction of the maximum voltage that can be generated at the converter output for a given level of the DC bus voltage. Another alternative to control the common-mode voltage in three-phase DC/AC power converters and reduce leakage currents consists in adding a fourth leg specifically devoted to this purpose [20].

The transformerless grid-connected power converter object of this patent, i.e., the DCM-xyz, solves the problem of the leakage currents generated by the common-mode voltage variability in the FB topology by using multiple DC voltage sources to deliver power to the AC grid, employing, at least, one DC source for each of the common-mode voltage levels associated to the active switching states of the power converter. In the case of PV power generation applications, multiple DC PV panels are connected to the DC bus, or DC buses, of the power converter following a proper sequence through a power multiplexer. Each DC PV panel, whose voltage might be boosted by using an additional DC-DC power converter if necessary, is associated to a given number of active switching states that share the same common-mode voltage level. If a given PV panel is connected to the DC bus when one of its associated active switching states is set in the power converter, its parasitic capacitances will be charged at a constant voltage level and they will keep charged at such voltage level during the time the PV panel disconnected from the DC bus of the power converter. As a consequence, no leakage currents flow through the parasitic impedances of the PV panels. The DC bus of the DCM-xyz power conversion topology is not connected to the neutral conductor, so the SVM technique can be used to synthesize the output voltage of the power converter. Moreover, a proper modulation of the DCM-xyz topology avoid any risk of transient short-circuit of the DC bus, so the switching states can be sequenced without introducing any dead-time, which allow get the most from the DC bus voltage. Additionally, the DCM-xyz topology exhibits lower switching losses than the conventional FB topologies, which allows achieving higher efficiency values.

**Summary of the Invention**

The DCM-xyz power conversion topology is an effective solution to cancel out the leakage currents to earth generated in three-phase power converters as a consequence of the high-frequency components of the common-mode voltage. The operation principle of the DCM-xyz power conversion topology is based on multiplexing the connection of multiple DC voltage sources to the power converter DC bus in a way that each one of them will be used to generate a particular set of output voltage vectors that share the same common-mode voltage level. As a consequence, the parasitic capacitances to earth of each DC voltage source keep charged at a constant voltage level and no leakage current flows through them. A specifically designed modulation technique makes possible a proper connection sequence for the DC voltage sources and provides additional features that are summarized in the following.

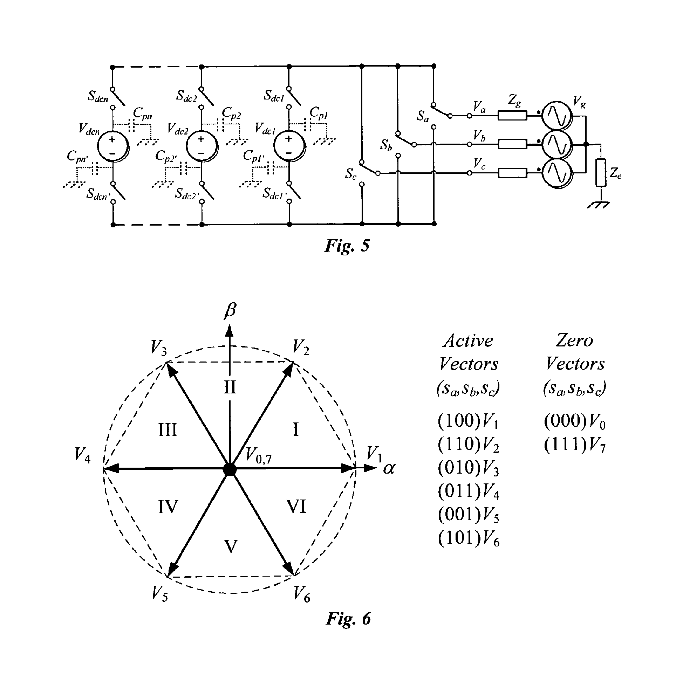

The DCM-xyz operation principle can be implemented in a wide range of power conversion configurations. A circuital representation of a grid-connected power converter structured according to the DCM-xyz power conversion topology is shown in *Fig.* 5. In this figure, the grid-side two-level three-phase full-bridge (FB) DC/AC power conversion structure has been represented by three single-pole double-toggle switches ($S_a$, $S_b$, $S_c$). The AC link-filter of the power converter has not been represented in this figure for the sake of simplifying explanation. A set of DC voltage sources may be either connected to or isolated from the DC bus of the FB power conversion structure by using a couple of switches ($S_{dci}$ and $S_{dci'}$, where i=1,2,..., n). The parasitic capacitances to earth of these DC voltage sources have been represented in *Fig. 5* as well ($C_{pi}$ and $Cp_{i'}$, where i=1,2,..., n). The three-phase grid is represented by a simple Thevenin circuit ($Zg$, $V_g$) and its neutral point is connected to the earth plane through a given impedance ($Z_e$). Considering the switching state for a switch i={a,b,c} defined as $s_i$=1 when the toggle connected to the top contact and $s_i$=0 to the bottom, the active and zero vectors generated by the FB power conversion structure are the ones shown in *Fig. 6,* where a given vector i={0,1,2,3,4,5,6,7} is defined as ($s_a$ $s_b$ $s_c$)$V_i$, with $s_a$, $s_b$ and $s_c$ the switching states of each leg of the FB. Taking DC bus voltage $V_{dc}$ and a feasible DC bus midpoint as the reference node (o), the common-mode voltage for $V_2$, $V_4$ and $V_6$ is +$V_{dc}$/6, the one for $V_1$, $V_3$ and $V_5$ is -$V_{dc}$/6, the one for $V_7$ is +$V_{dc}$/2 and the one for $V_0$ is - $V_{dc}$/2. According to this, if the DC voltage source $V_{dc1}$ is connected to the DC bus to generate any of the odd vectors $V_1$, $V_3$ and $V_5$, its parasitic capacitances $C_{p1}$ and $C_{p1'}$ are charged at +2$V_{dc}$/3 and -$V_{dc}$/3, respectively. In the same way, if the DC voltage source $V_{dcl}$ is connected to the DC bus to generate any of the even vectors $V_2$, $V_4$ and $V_6$, its parasitic capacitances $C_{p2}$ and $Cp_{2'}$ are charged at +$V_{dc}$/3 and -2$V_{dc}$/3, respectively. All the DC voltage sources are disconnected from the DC bus when the zero vectors $V_0$ and $V_7$ are generated by the FB, so the parasitic capacitances cannot be discharged at such time. Therefore, a proper modulation method, which properly sequences the connection of the DC voltage source according to the SVM technique, allows generating a pattern of voltage vectors at the output of the power converter similar to the one in the conventional two-level three-phase FB, but with no leakage current flowing through the parasitic capacitances. The modulation technique of the DCM-xyz power converter is a crucial issue. The conventional SVM used in three-phase FB power converters cannot be used in the DCM-xyz power converter since transitions between active voltage vectors involving two different DC voltage sources are not allowed to avoid any risk of short-circuit. This means that a zero vector should be inserted between two consecutive active vectors -with different level of common-mode voltage, in order to achieve a proper operation of the DCM-xyz power converter. Therefore, the modulation technique of the DCM-xyz power converter should be specifically designed considering the power processing system as a whole, and not as simple cascade connection of two individual power converters.

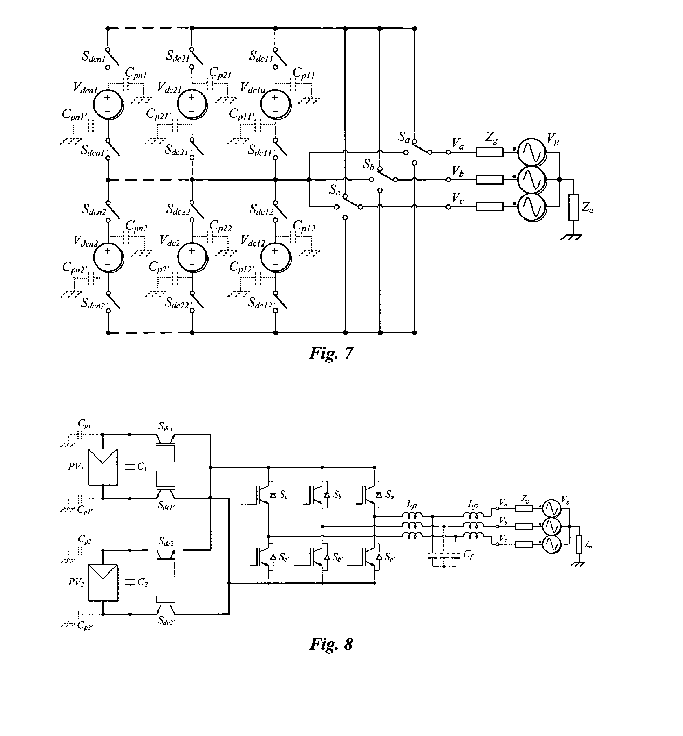

It is worth to highlight that more than one DC voltage source can be assigned to generate a given set of voltage vectors at the output of the power converter. This is represented in *Fig. 5* by means of the DC voltage source $V_{dcn}$. In such a case, a given DC voltage source is sequenced to participate in the generation of a given set of voltage vectors at the power converter output after a given number of switching periods. It is also necessary to remark that the FB might consist of switching legs able to generate more than two levels. In such a case, the number of levels in the common-mode voltage may increase as well as the number of DC buses. *Fig. 7* shows a circuital scheme of a DCM-xyz power conversion topology with a three-level three-phase FB at the AC side. In this case, two DC buses are available and a higher number of DC voltage sources that in the case of the two-level topology might be time multiplexed.

In the following, the main characteristics of the DCM-xyz power conversion topology are summarized:

i) This power converter presents a single- or multi-phase FB topology at its AC side and a multi-port structure at its DC side, analogous to the case of the multi-string power converters used in PV systems.
ii) The multiple DC voltage sources are time multiplexed in a way such as their parasitic capacitances to earth keep charged at a constant voltage value, which avoids leakage currents flowing through them.
iii) The fact of using multiple DC voltage sources entails an inherent advantage, since the power generation system can stay temporarily operative in case reparation or maintenance of one of the DC voltage sources.
iv) The PWM technique does not allow sequencing consecutive active vectors, which makes no necessary the insertion of dead-times in the modulator. This allows getting the most from the DC bus voltage and the PWM algorithm.
v) The DC bus is not connected to the neutral conductor of the AC side, so a tailored version of the conventional SVM technique can be used to get the most from the DC bus voltage, i.e., a modulation index $M = 1$ $(M = V_{line-line(peak)}/V_{dc})$

vi) The switching power losses are decreased in relation to the conventional FB power converter since the main part of the hard-switching losses are concentrated in the transition from an active voltage vectors to a zero voltage vectors.

vii) The proper design of the PWM technique can compensate differences among the values of the DC voltage sources.

viii) The proper design of the PWM technique can control power sharing among the DC voltage sources.

Several features from the above list make the DCM-xyz power conversion topology very suitable to be applied in PV power generation systems, since this power converter can achieve high efficiency (transformerless with no leakage current and low switching losses), high performance (SVM with no dead-times) and high productivity (maximum power point setting by individually regulating voltage/power in multiple DC PV panels).

**Brief description of the drawings**

**Fig. 1** shows the general structure of the DCM-xyz power conversion topology, where {1} are the DC elements to be sequentially connected to be the DC bus, {2} are the DC ports, {3} is the DC power multiplexer that makes possible a sequential connection of the DC elements to the DC bus, {4} is the DC/AC power conversion structure that processes power between the AC and DC sides, {5} is the AC port, {6} is the link filter that avoid the flow of high-frequency current components from the power converter to the AC side, and {7} is the AC grid.

**Fig. 2** shows the diagram of the most common configuration of the DCM-xyz power converter, i.e., when it works as a grid/connected inverter collecting power from the DC side and delivering to the AC side. In this figure, {1} are the input DC sources, {3} is the DC power multiplexer, {4} is the DC/AC power converter, {6} is the grid link filter and {7} is the AC grid.

**Fig. 3** shows the diagram of a configuration of the DCM-xyz power converter in which the system works as an active rectifier supplying multiple loads connected at its DC side from the power consumed from the AC grid. In this figure, {1} represents the DC loads, which have been paralleled with a capacitor to ensure a continuous power flow.

**Fig. 4** shows the diagram of a configuration of the DCM-xyz power converter in which the system works as a stand-alone inverter supplying an AC load by using the power collected from the DC side. In this case, {8} represents the load connected at the AC side.

**Fig. 5** shows a circuital representation of a grid-connected power converter structured according to the DCM-xyz power conversion topology.

**Fig.** 6 represents the space voltage vectors that can be synthesized through a two-level three-phase full-bridge power converter.

**Fig. 7** shows a circuital scheme of a grid-connected DCM-xyz power converter with a three-level three-phase full-bridge at the AC side and multiple DC voltage sources to be multiplexed at the DC side.

**Fig. 8** shows the electrical scheme of a preferred embodiment of the DCM-xyz power converter, i.e., a grid connected PV generation application based on a DCM-232 power converter, comprising 2 DC PV panels, 3 AC phases and 2 voltage levels at the AC side.

**Fig. 9** shows a feasible current flow in a DCM-232 power converter when the vector $V_1$ is generated at its AC side.

**Fig.10** shows a feasible current flow in a DCM-232 power converter when the vector $V_{01}$ is generated at its AC side.

**Fig.11** shows a feasible current flow in a DCM-232 power converter when the vector $V_{02}$ is generated at its AC side.

**Fig.12** shows a feasible current flow in a DCM-232 power converter when the vector $V_2$ is generated at its AC side.

*Fig.13* represents in a table the modulation control signals of a DCM-232 power converter when a generic reference vector is synthesized at its AC side by using the following switching pattern $V_{01}$-$V_1$- $V_{01}$- $V_{02}$-$V_2$-$V_{02}$-$V_{01}$-$V_1$-$V_{01}$

*Fig.14* represents in a table the modulation control signals of a DCM-232 power converter when a generic reference vector is synthesized at its AC side by using the following switching pattern $V_{02}$-$V_2$-$V_{02}$-$V_{01}$-$V_1$-$V_{01}$-$V_{02}$-$V_2$-$V_{02}$

*Fig.15* represents in a table the modulation control signals of a DCM-232 power converter when a generic reference vector is synthesized at its AC side by using the following switching pattern $V_{01}$-$V_1$-$V_{01}$-$V_{02}$-$V_2$-$V_{02}$-$V_2$-$V_{02}$-$V_{01}$-$V_1$-$V_{01}$

*Fig.16* represents in a table the modulation control signals of a DCM-232 power converter when a generic reference vector is synthesized at its AC side by using the following switching pattern $V_{02}$-$V_2$-$V_{02}$-$V_{01}$-$V_1$-$V_{01}$-$V_1$-$V_{01}$-$V_{02}$-$V_2$-$V_{02}$

*Fig.17* represents in a table the modulation control signals of a DCM-232 power converter when power sharing control is used to synthesize a generic reference vector at its AC side by using the following switching pattern $V_{01}$-$V_1$-$V_{01}$-$V_{02}$-$V_2$-$V_{02}$-$V_{03}$-$V_3$-$V_{03}$-$V_{02}$-$V_2$-$V_{02}$-$V_{01}$-$V_1$-$V_{01}$

*Fig.18* represents in a table the modulation control signals of a DCM-232 power converter when power sharing control is used to synthesize a generic reference vector at its AC side by using the following switching pattern $V_{01}$-$V_1$-$V_{01}$-$V_{02}$-$V_2$-$V_{02}$-$V_{06}$-$V_6$-$V_{06}$-$V_{02}$-$V_2$-$V_{02}$-$V_{01}$-$V_1$-$V_{01}$

**Description of the preferred embodiment**

A preferred embodiment of the DCM-xyz power converter is shown in *Fig. 8.* This power conversion system consists of 2 DC ports, where 2 PV panels are connected, 3 AC phases, connected to an AC grid through a link filter $(L_{fl}, C_f, L_{f2})$, and a 2-level full-bridge DC/AC power conversion structure, therefore this system is named as the DCM-232 power converter. In the following, a description of this topology and its modulation technique is provided.

*The* DCM-232 *power converter*

The DCM-232 power converter shown in *Fig. 8* comprises ten switches, six of which are used to implement a two-level three-phase full-bridge DC/AC power converter and the remaining four ones are used to implement a DC power multiplexer with two DC input ports. In this case, the switches used in the full-bridge structure are unidirectional with free-wheeling diodes in parallel, while the switches used in the DC power multiplexer are unidirectional with reverse blocking capability. A PV panel, with a capacitor in parallel to guarantee power flow continuity, is connected to each of these DC ports of the DC power multiplexer. The parasitic capacitances of the PV panels are represented by dashed lines in *Fig. 8*. The conventional full-bridge DC/AC power converter can generate eight voltage vectors, i.e., six active-vectors and two zero-vectors, which are represented in *Fig. 6*. The DC power multiplexer make possible to feed the odd active voltage vectors $(V_1, V_3$ and $V_5)$ from the $PV_1$ panel and the even active voltage vectors $(V_2, V_4$ and $V_6)$ from the $PV_2$ panel. The set of active vectors assigned to each PV panel can be changed online according to the operating conditions of the power converter. Both two PV panels are disconnected from the internal DC bus when the zero vectors are generated at the output of the DC/AC power converter. In this way, the parasitic capacitances of the PV panels remain charged at a constant voltage level and no leakage current flows through them.

It is worth to highlight that the DCM-232 power converter presents an important difference in respect to the conventional full-bridge power converter, namely, there are multiple switching states to generate the zero-vectors in the DCM-232 power converter instead of the only two ones generated by the conventional full-bridge power converter. Actually, when the four switches of the DC power multiplexer are in OFF state, i.e, when the DC bus of the full-bridge is an open-circuit, there are multiple switching states that allow the zero-state current to flow through the full-bridge switches. In this way, the zero-vectors of the DCM-232 power converter have been named as $V_{0i}$, where $i=\{0,1,2,3,4,5,6,7\}$ indicates the switching state of the full-bridge power converter. A zero voltage vector should be inserted in the transition between even and odd voltage vectors in the modulation of the DCM-232 power converter to avoid any risk of short-circuiting the voltage sources connected to its two DC ports and to guarantee the controllability over the output waveforms. Moreover, no dead-time is necessary in the transition between two zero switching states of the DCM-232 power converter since no voltage is applied to its DC bus at that moment.

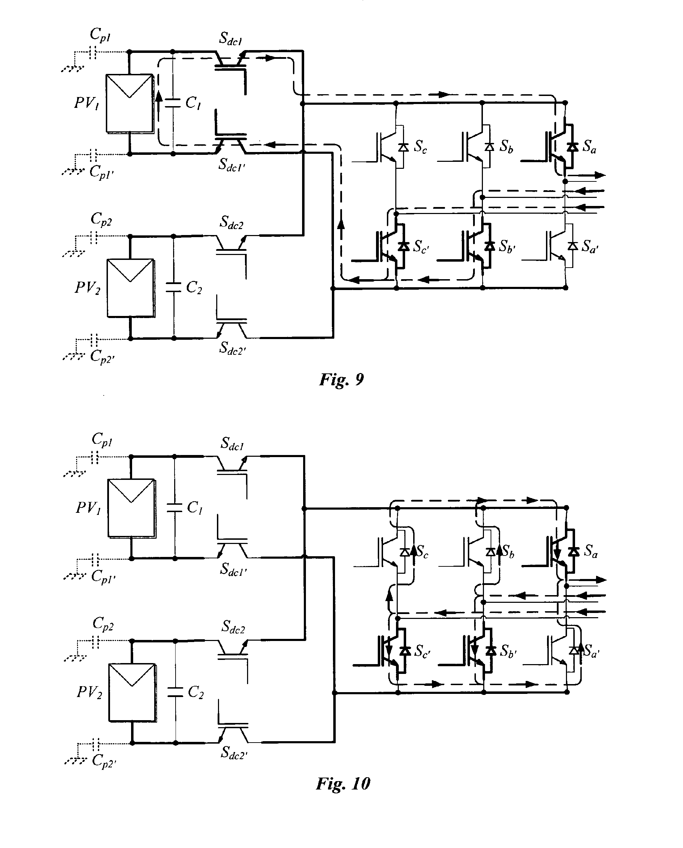

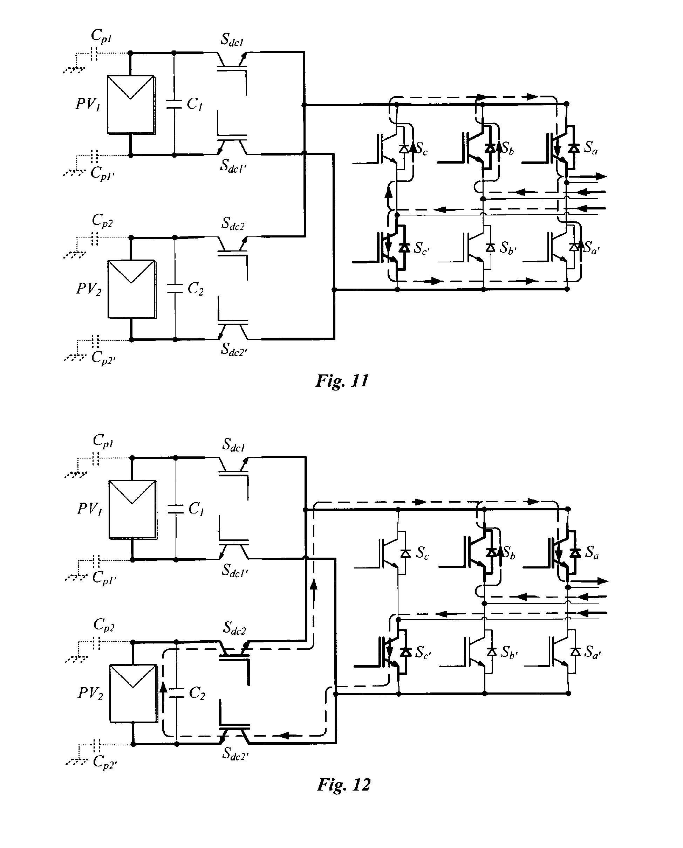

To illustrate the particular features in the switching sequence of the DCM-232 power converter, the switching states to transition from the vector $V_1$ to the vector $V_2$ at the output of the power converter are commented in the following. By using dashed lines, *Fig. 9* represents a feasible current flow in the DCM-232 power converter when the voltage vector $V_1$ is generated at its output. In this case, the panel $PV_1$ is used to generate the odd active vectors and the $PV_2$ the even active vectors. As it can be appreciated in this figure, the DC current flows through the $PV_1$ while the $PV_2$ is electrically

disconnected from the DC bus. To avoid any risk of short-circuit or lose of controllability, the panel $PV_2$ is not connected to the DC bus while the $PV_1$ does. Instead of that, a zero vector is introduced in the transition between two active-vectors. To evolution from $V_1$ toward the zero-vector, the $PV_1$ panel should be electrically disconnected from the DC bus by turning the $S_{dcl}$-$S_{dcl'}$ switches to their OFF state. This transition entails hard switching power losses in the $S_{dcl}$-$S_{dcl'}$ switches of the power multiplexer since the DC current flows through these switches until their forward voltage is high enough to make the full-bridge DC bus voltage close to zero. A proper forward voltage sharing between $S_{dcl}$ and $S_{dcl'}$ contributes to decrease the stress in the turning OFF of these switches. Once the free-wheeling diodes of the full-bridge structure are forward polarized, the DC current goes down to zero and a zero voltage vector is generated at the output of the DCM-232 power converter. *Fig. 10* shows the current flow in the three-phase full-bridge structure just after electrically disconnecting the $PV_1$ panel. As appreciated in this figure, the full-bridge switches in ON state are the same as in the case of generating the active vector $V_1$, for this reason, this particular zero vector is named as $V_{01}$. The zero state currents are share among multiple paths when the $V_{01}$ is set, which reduces conduction losses in this switching state. As the next active vector to be generated at the output of the DCM-232 power converter is the vector $V_2$, the zero vector is set to its $V_{02}$ configuration, i.e., the switches of the full-bridge are turned ON as in the case of generating the $V_2$ active vector, but with no voltage source connected to its DC bus. As there is not any risk of short-circuit, this transition is performed without inserting any dead-time. The switches $S_b$ and $S_{b'}$ should turn ON and OFF, respectively, to generate the $V_{02}$ zero vector. This transition does not entail hard-switching losses. *Fig. 11* shows the current flow in the three-phase full-bridge structure when the $V_{02}$ vector is set. To generate the $V_2$ vector at the output of the DCM-232 power converter, the $PV_2$ panel is electrically connected to the DC bus by turning ON the $S_{dc2}$-$S_{dc2'}$ switches. When the $PV_2$ panel is connected, some free-wheeling full-bridge diodes are reverse polarized and the DC current starts flowing through the $PV_2$ panel, with reduced hard switching losses in this transition. *Fig. 12* shows the current flow in the three-phase full-bridge structure when the $V_2$ vector is set.

According to the above explanation, six zero switching states are used in the modulation of the DCM-232 power converter to generate the zero vector, i.e., $V_{01}$, $V_{02}$, $V_{03}$, $V_{04}$, $V_{05}$ and $V_{06}$. In the modulation technique proposed for the DCM-232 power converter the two PV panels are electrically disconnected from the DC bus when a zero vector is generated at its output. However, both PV panels might have been simultaneously connected to the DC bus without making any short-circuit, thanks to the usage of unidirectional switches in the DC power multiplexer. Nevertheless, in the modulation technique proposed for the DCM-232 power converter, at least a zero vector state is inserted in the transition between two active vectors to avoid any risk of transient short-circuit and leakage currents due to the reverse recovery time of the switches. Furthermore, the parallel connection of two PV panels gives rise to leakage currents to balance the state of charge of the parasitic capacitances to earth of both of them. Moreover, in case of connecting in parallel two PV panels with different DC voltage levels, the PV panel with highest voltage level would block the connection switches of the other one, which might give rise to uncontrolled DC bus voltage variations that would distort the current injected in the AC grid by the power converter.

*Modulation Strategies*

Some modulation strategies to synthesize a reference voltage vector located in the Section I of *Fig. 6*, i.e., between $V_1$ and $V_2$, are presented in the following by using switching tables. In these tables, each either filled or unfilled cell indicates that the corresponding switch $S_i$, with $i=\{a,b,c,dcl,dc2\}$, is in the either ON or OFF state, respectively, when a given voltage vector is generated at the output of the DCM-232 power converter.

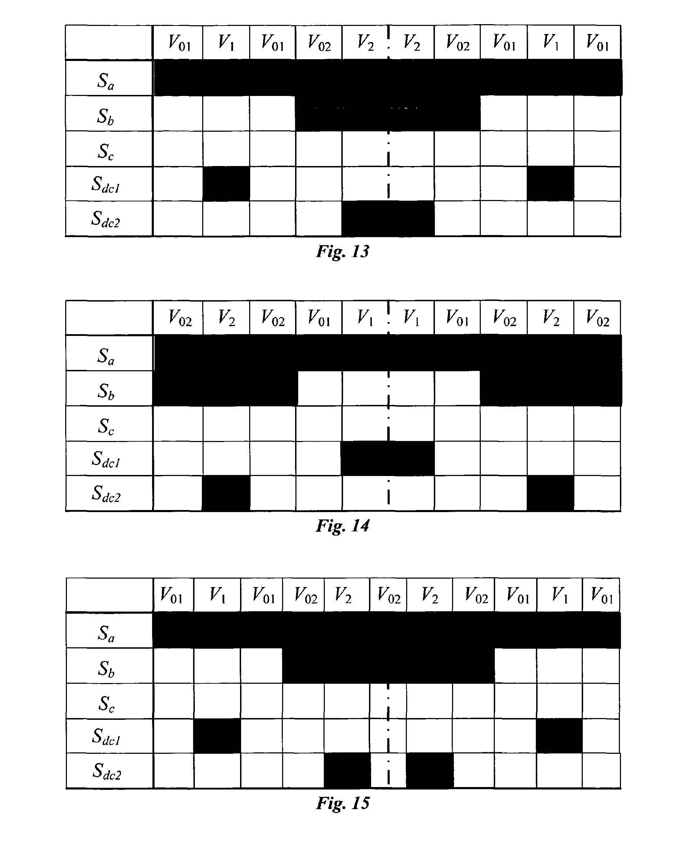

*Fig. 13* represents the switch control signals for a switching period by using the following switching pattern: $V_{01}$-$V_1$-$V_{01}$-$V_{02}$-$V_2$-$V_{02}$-$V_{01}$-$V_1$-$V_{01}$.

*Fig. 14* represents the switch control signals for a switching period by using the following switching pattern: $V_{02}$-$V_2$-$V_{O2}$-$V_{01}$-$V_1$-$V_{01}$-$V_{02}$-$V_2$-$V_{02}$.

The switching patterns of *Fig. 13* and *Fig. 14* give rise to the injection of asymmetrical ripple in the currents injected into the AC grid, i.e., the current ripple is different in positive and negative half-cycle of the injected three-phase sinusoidal currents. A solution to avoid the ripple asymmetry consists in alternating the switching patterns of *Fig. 13* and *Fig. 14* between consecutive switching periods.

*Fig. 15* represents the switch control signals for a switching period by using the following switching pattern: $V_{01}$-$V_1$-$V_{01}$-$V_{02}$-$V_2$-$V_{02}$-$V_2$-$V_{02}$-$V_{01}$-$V_1$-$V_{01}$.

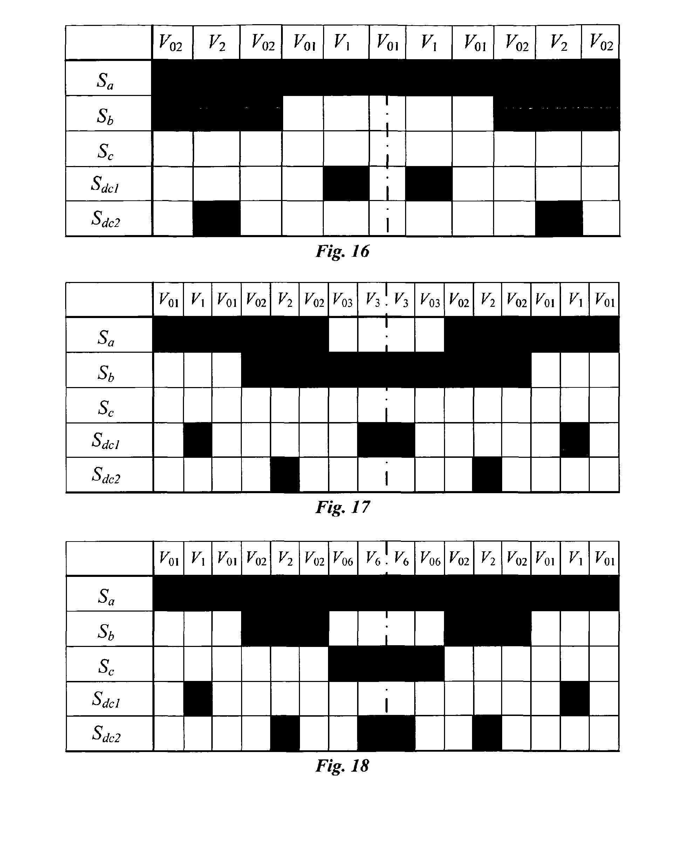

*Fig. 16* represents the switch control signals for a switching period by using the following switching pattern: $V_{02}$-$V_2$-$V_{02}$-$V_{01}$-$V_1$-$V_{01}$-$V_1$-$V_{01}$-$V_{02}$-$V_2$-$V_{02}$.

The switching patterns of *Fig. 15* and *Fig. 16* allow improving ripple symmetry in the currents injected into the AC grid. A further improvement can be achieved by alternating the switching patterns of *Fig. 15* and *Fig. 16* between consecutive switching periods.

A simple modification in the switching patterns presented above allows the DCM-232 power converter to operate under DC voltage unbalance conditions. In such a case, the time for the active vector with the lowest DC voltage level should be increased according to the DC voltage unbalance rate $(V_{dc1}/V_{dc2})$. The extended time for the active vector should be subtracted from the calculated time for the zero vectors in order to keep constant the switching period. In case the zero vectors time could not be decreased bellow a given limit, the switching period had to be extended.

Power sharing between the two DC ports of the DCM-232 power converter can be also controlled by using different strategies.

When the reference voltage is located close to the beginning of Section I, the DC port connected to $PV_1$, the one in charge of generating the odd active vectors, supplies more power to the AC grid than the one connected to $PV_2$, the one in charge of generating the even active vectors. When the voltage reference is located at the middle of the section, $PV_1$ and $PV_2$ deliver the same amount of power. Finally, when the reference vector is located close to the end of Section I, the DC port connected to $PV_2$ supplies more power to the AC grid than the one connected to $PV_1$. This explanation is also valid for the rest of sections of the hexagon of **Fig. 6**. Therefore, a simple method for controlling power sharing between both DC ports consists in swapping their role in each section of **Fig. 6** according to a calculated rate, i.e., the set of odd and even active vectors assigned to both DC ports are swapped at an specific point within each section. This simple solution however gives rise to common mode voltage jumps at three times the fundamental component frequency. This low-frequency common-mode voltage component originates small leakage currents flowing through the parasitic capacitances of the PV panels.

Another technique for controlling power sharing between the two DC ports of the DCM-232 power converter is based setting a modulation pattern consisting in three (or more) active vectors. In this manner, the reference voltage vector is synthesized by using odd (even) active vectors in a controlled higher rate than even (odd) active vectors.

**Fig. 17** represents the switch control signals for a switching period by using the following switching pattern $V_{01}$-$V_1$-$V_{01}$-$V_{02}$-$V_2$-$V_{02}$-$V_{03}$-$V_3$-$V_{03}$-$V_{02}$-$V_2$-$V_{02}$-$V_{01}$-$V_1$-$V_{01}$. In this case, the odd vectors are used in a higher rate than the even ones.

**Fig. 18** represents the switch control signals for a switching period by using the following switching pattern $V_{01}$-$V_1$-$V_{01}$-$V_{02}$-$V_2$-$V_{02}$-$V_{06}$-$V_6$-$V_{06}$-$V_{02}$-$V_2$-$V_{02}$-$V_{01}$-$V_1$-$V_{01}$. In this case, the even vectors are used in a higher rate than the odd ones.

## Claims

1. A power conversion system and its modulation technique comprising an AC port, which is connected to an DC/AC full-bridge power conversion structure with one or more DC buses, which are in turn connected to a DC power multiplexer, which allows connecting more than one DC ports, whose connection to the DC buses is time multiplexed according to a specific modulation technique to minimize the effect of the common-mode voltage generated by the DC/AC full-bridge power conversion structure on the leakage current flowing to earth through parasitic capacitances at the DC side.

2. The power conversion system claimed in 1, where the DC/AC power converter can have one or more AC phases.

3. The power conversion system claimed in 1, where the DC/AC power converter can have one or more DC buses in the DC/AC full-bridge power conversion structure.

4. The power conversion system claimed in 1, where the DC/AC full-bridge power conversion structure can generate two or more voltage levels at its AC side.

5. The power conversion system claimed in 1, where the DC/AC full-bridge power conversion structure can work as either an inverter or a rectifier.

6. The power conversion system claimed in 1, where several DC/AC power converters can work in parallel, without galvanic isolation among them.

7. The power conversion system claimed in 1, where the AC port can be connected to an AC electrical network, to a stand-alone AC generation system, or to an AC load.

8. The power conversion system claimed in 1, where the DC power multiplexer can present any topology that allows sequencing a selective connection one or more of the multiple DC ports to the DC buses of the DC/AC full-bridge power conversion structure.

9. The power conversion system claimed in 1, where the DC power multiplexer can manage a power flow either from the DC ports to the DC buses or viceversa.

10. The power conversion structure claimed in 1, where the DC ports can be connected either to DC power sources or to DC loads.

11. The power conversion system claimed in 1, where its modulation technique allows managing the selective connection of a given DC port to the DC buses according to the level of the common-mode voltage generated by the DC/AC full-bridge power conversion structure.

12. The power conversion system claimed in 1, where its modulation technique allows managing DC ports with different voltage levels

13. The power conversion system claimed in 1, where its modulation technique allows regulate the power sharing among multiple DC ports.

Fig. 1

Fig. 2

*Fig. 3*

*Fig. 4*

**Fig. 5**

| Active Vectors $(s_a, s_b, s_c)$ | Zero Vectors $(s_a, s_b, s_c)$ |
|---|---|
| $(100)V_1$ | $(000)V_0$ |
| $(110)V_2$ | $(111)V_7$ |
| $(010)V_3$ | |
| $(011)V_4$ | |
| $(001)V_5$ | |
| $(101)V_6$ | |

**Fig. 6**

**Fig. 7**

**Fig. 8**

**Fig. 9**

**Fig. 10**

Fig. 11

Fig. 12

| | $V_{01}$ | $V_1$ | $V_{01}$ | $V_{02}$ | $V_2$ | $V_2$ | $V_{02}$ | $V_{01}$ | $V_1$ | $V_{01}$ |
|---|---|---|---|---|---|---|---|---|---|---|
| $S_a$ | ■ | ■ | ■ | ■ | ■ | ■ | ■ | ■ | ■ | ■ |
| $S_b$ | □ | □ | □ | ■ | ■ | ■ | ■ | □ | □ | □ |
| $S_c$ | □ | □ | □ | □ | □ | □ | □ | □ | □ | □ |
| $S_{dc1}$ | □ | ■ | □ | □ | □ | □ | □ | □ | ■ | □ |
| $S_{dc2}$ | □ | □ | □ | □ | ■ | ■ | □ | □ | □ | □ |

*Fig. 13*

| | $V_{02}$ | $V_2$ | $V_{02}$ | $V_{01}$ | $V_1$ | $V_1$ | $V_{01}$ | $V_{02}$ | $V_2$ | $V_{02}$ |
|---|---|---|---|---|---|---|---|---|---|---|
| $S_a$ | ■ | ■ | ■ | ■ | ■ | ■ | ■ | ■ | ■ | ■ |
| $S_b$ | ■ | ■ | ■ | □ | □ | □ | □ | ■ | ■ | ■ |
| $S_c$ | □ | □ | □ | □ | □ | □ | □ | □ | □ | □ |
| $S_{dc1}$ | □ | □ | □ | □ | ■ | ■ | □ | □ | □ | □ |
| $S_{dc2}$ | □ | ■ | □ | □ | □ | □ | □ | □ | ■ | □ |

*Fig. 14*

| | $V_{01}$ | $V_1$ | $V_{01}$ | $V_{02}$ | $V_2$ | $V_{02}$ | $V_2$ | $V_{02}$ | $V_{01}$ | $V_1$ | $V_{01}$ |
|---|---|---|---|---|---|---|---|---|---|---|---|
| $S_a$ | ■ | ■ | ■ | ■ | ■ | ■ | ■ | ■ | ■ | ■ | ■ |
| $S_b$ | □ | □ | □ | ■ | ■ | ■ | ■ | ■ | □ | □ | □ |
| $S_c$ | □ | □ | □ | □ | □ | □ | □ | □ | □ | □ | □ |
| $S_{dc1}$ | □ | ■ | □ | □ | □ | □ | □ | □ | □ | ■ | □ |
| $S_{dc2}$ | □ | □ | □ | □ | ■ | □ | ■ | □ | □ | □ | □ |

*Fig. 15*

|  | $V_{02}$ | $V_2$ | $V_{02}$ | $V_{01}$ | $V_1$ | $V_{01}$ | $V_1$ | $V_{01}$ | $V_{02}$ | $V_2$ | $V_{02}$ |
|---|---|---|---|---|---|---|---|---|---|---|---|
| $S_a$ | | | | | | | | | | | |
| $S_b$ | | | | | | | | | | | |
| $S_c$ | | | | | | | | | | | |
| $S_{dc1}$ | | | | | | | | | | | |
| $S_{dc2}$ | | | | | | | | | | | |

**Fig. 16**

|  | $V_{01}$ | $V_1$ | $V_{01}$ | $V_{02}$ | $V_2$ | $V_{02}$ | $V_{03}$ | $V_3$ | $V_3$ | $V_{03}$ | $V_{02}$ | $V_2$ | $V_{02}$ | $V_{01}$ | $V_1$ | $V_{01}$ |
|---|---|---|---|---|---|---|---|---|---|---|---|---|---|---|---|---|
| $S_a$ | | | | | | | | | | | | | | | | |
| $S_b$ | | | | | | | | | | | | | | | | |
| $S_c$ | | | | | | | | | | | | | | | | |
| $S_{dc1}$ | | | | | | | | | | | | | | | | |
| $S_{dc2}$ | | | | | | | | | | | | | | | | |

**Fig. 17**

|  | $V_{01}$ | $V_1$ | $V_{01}$ | $V_{02}$ | $V_2$ | $V_{02}$ | $V_{06}$ | $V_6$ | $V_6$ | $V_{06}$ | $V_{02}$ | $V_2$ | $V_{02}$ | $V_{01}$ | $V_1$ | $V_{01}$ |
|---|---|---|---|---|---|---|---|---|---|---|---|---|---|---|---|---|
| $S_a$ | | | | | | | | | | | | | | | | |
| $S_b$ | | | | | | | | | | | | | | | | |
| $S_c$ | | | | | | | | | | | | | | | | |
| $S_{dc1}$ | | | | | | | | | | | | | | | | |
| $S_{dc2}$ | | | | | | | | | | | | | | | | |

**Fig. 18**

Europäisches
Patentamt

European
Patent Office

Office européen
des brevets

# EUROPEAN SEARCH REPORT

Application Number

EP 11 38 4202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 063201 A1 (WEINMANN MARTIN [DE]) 22 July 2010 (2010-07-22)<br>* figures 16,20,21,22 *<br>* paragraphs [0009], [0018], [0067] - [0069], [0093] - [0098], [0104], [0105], [0116], [0120] *<br>----- | 1-13 | INV.<br>H02M7/81<br>H02M1/12<br>H02J3/48 |
| A | US 2010/250018 A1 (HAUF HARALD [FR] ET AL) 30 September 2010 (2010-09-30)<br>* figures 2-11 *<br>----- | 1-13 | |
| A | DE 10 2008 048841 B3 (FRAUNHOFER GES FORSCHUNG [DE])<br>28 January 2010 (2010-01-28)<br>* figures 7A,7B *<br>* paragraph [0045] *<br>----- | 1-13 | |
| A | EP 1 211 797 A2 (SIEMENS AG [DE])<br>5 June 2002 (2002-06-05)<br>* figures 11,12,16 *<br>* paragraphs [0009] - [0011], [0026], [0028], [0040], [0054], [0084] - [0087], [0089] *<br>----- | 1-13 | |
| | | | TECHNICAL FIELDS SEARCHED (IPC)<br><br>H02M<br>H02J |

The present search report has been drawn up for all claims

| Place of search | Date of completion of the search | Examiner |
|---|---|---|
| The Hague | 19 June 2012 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 38 4202

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2012

| Patent document cited in search report | Publication date | Patent family member(s) | | Publication date |
|---|---|---|---|---|
| DE 102008063201 A1 | 22-07-2010 | DE 102008063201 | A1 | 22-07-2010 |
| | | EP 2421142 | A1 | 22-02-2012 |
| US 2010250018 A1 | 30-09-2010 | AT 544222 | T | 15-02-2012 |
| | | EP 2208276 | A1 | 21-07-2010 |
| | | ES 2381906 | T3 | 01-06-2012 |
| | | FR 2923653 | A1 | 15-05-2009 |
| | | US 2010250018 | A1 | 30-09-2010 |
| | | WO 2009060273 | A1 | 14-05-2009 |
| DE 102008048841 B3 | 28-01-2010 | CA 2738132 | A1 | 01-04-2010 |
| | | CN 102165681 | A | 24-08-2011 |
| | | DE 102008048841 | B3 | 28-01-2010 |
| | | EP 2327145 | A1 | 01-06-2011 |
| | | JP 2012503963 | A | 09-02-2012 |
| | | KR 20110056427 | A | 27-05-2011 |
| | | US 2011255316 | A1 | 20-10-2011 |
| | | WO 2010034413 | A1 | 01-04-2010 |
| EP 1211797 A2 | 05-06-2002 | DE 10059331 | A1 | 13-06-2002 |
| | | EP 1211797 | A2 | 05-06-2002 |
| | | US 2002093836 | A1 | 18-07-2002 |

EPO FORM P0459

For more details about this annex : see Official Journal of the European Patent Office, No. 12/82